Europäisches Patentamt

European Patent Office

Office européen des brevets

(11) Veröffentlichungsnummer: **0 198 272**
**B1**

(12) **EUROPÄISCHE PATENTSCHRIFT**

(45) Veröffentlichungstag der Patentschrift: **13.06.90**

(21) Anmeldenummer: **86103963.4**

(22) Anmeldetag: **22.03.86**

(51) Int. Cl.⁵: **G 01 F 1/075**, G 01 F 15/06, G 01 D 5/20

(54) Fühler zum Umsetzen einer mechanischen Eingangsgrösse in eine elektrische Ausgangsgrösse.

(30) Priorität: **13.04.85 DE 3513303**
**29.05.85 DE 3519215**

(43) Veröffentlichungstag der Anmeldung:
**22.10.86 Patentblatt 86/43**

(45) Bekanntmachung des Hinweises auf die
Patenterteilung:
**13.06.90 Patentblatt 90/24**

(84) Benannte Vertragsstaaten:
**AT BE CH FR LI NL SE**

(56) Entgegenhaltungen:
**EP-A-0 121 734**
**DE-A-1 163 200**
**DE-A-2 929 409**
**US-A-2 128 752**
**US-A-3 812 429**
**US-A-4 401 986**

(73) Patentinhaber: **Ziegler, Horst Prof. Dr.**
**Steinhauser Weg 13**
**D-4790 Paderborn (DE)**

(72) Erfinder: **Ziegler, Horst, Prof. Dr.**
**Steinhauser Weg 13**
**D-4790 Paderborn (DE)**
Erfinder: **Behlen, Horst, Dipl.-Ing.**
**Lange Trift 21**
**D-4790 Paderborn-Dahl (DE)**
Erfinder: **Hoentzsch, Christof, Dr.**
**August-Potthast-Weg 13**
**D-4790 Paderborn (DE)**

(74) Vertreter: **Splanemann, Rainer, Dipl.-Ing. et al**
**Patentanwälte Dipl.-Ing. R. Splanemann, Dr. B**
**Reitzner Tal 13**
**D-8000 München 2 (DE)**

**Beschreibung**

Die Erfindung betrifft einen Fühler zum Umsetzen einer mechanischen Eingangsgröße in eine elektrische Ausgangsgröße gemäß dem Oberbegriff des Anspruches 1.

Ein derartiger Fühler, allerdings nicht in Verbindung mit einem Flügelrad-Durchflußmesser, ist in der US—A—3 812 429 beschrieben. Über einen sendeseitigen Schwingkreis, der mit dem Ausgangssignal eines Sinusoszillators versorgt ist, wird kontinuierlich elektromagnetische Strahlung abgegeben. Ein Modulationskörper ist gezahnt ausgebildet und soll das Empfangen der ausgesendeten elektromagnetischen Wellen in einem Empfangskreis verhindern, wenn sich ein Zahn im einem Spalt zwischen der Sendespule und der Empfängerspule befindet. Gemäß der US—A—3 812 429 sollen die Resonanzfrequenzen des Sende und des Empfangskreises vorzugsweise voneinander verschieden sein und können zur Erzeugung einer schärferen Abstimmung auch gleich sein. Die Sinusfrequenz des dortigen Oszillators unterscheidet sich jedenfalls von der Resonanzfrequenz. Zweck dieser Maßnahme ist es, eine Unabhängigkeit von der Leitungslänge zu erreichen. Hierdurch ist aber eine erhöhte Energie für den Oszillator erforderlich, um überhaupt ein Schwingen des sendeseitigen Schwingkreises zu ermöglichen. Da die Sende und Empfangsspulen einander gegenüberstehen, kann es zu direkten (kapazitiven) Kopplungen kommen.

Ein derartiger Fühler ist in der EP—A1—0 121 734 in Verbindung mit einem Flügelrad-Durchflußmesser beschrieben. Dort trägt das Flügelrad einen zur Drehachse konzentrischen teilzylindrischen Modulationskörper, und innerhalb der vom letzteren durchlaufenen Bahn ist eine Sendespule angeordnet. Leztere wird vom Speisekreis her mit kurzen Impulsen beaufschlagt. Das von ihr erzeugte Magnetfeld kann zwei außerhalb der Bahn des Blendenkörpers angeordnete Empfängerspulen erreichen, die mit einer Ausweteschaltung verbunden sind. Jedesmal dann, wenn der Magnetfluß durch die Empfängerspulen unterbrochen wird, wird ein mit der Ausweteschaltung verbundener Zähler um eins hochgezählt.

In der DE-OS 32 41 222 ist ferner ein ähnlicher Fühler beschrieben, bei welchem der Modulationskörper durch ein elektrisch leitendes Materialstück gebildet ist, welches an einer Spule vorbeiläuft, die Teil eines Schwingkreises ist. Steht das Metallstück der Spule gegenüber, so hat der Schwingkreis eine andere Eigenfrequenz als bei nicht der Spule gegenüberstehendem Materialstück. Diese Verstimmung des die Spule enthaltenden Schwingkreises kann mit einer geeigneten Auswerteschaltung wieder in Impulse umgesetzt werden, durch welche ein Zähler hochgezählt wird.

In der DE—OS 33 10 239 ist ferner ein berührungsfrei arbeitender Fühler zur Verwendung an einem Flügelrad-Durchflußmesser beschrieben, welcher einen Ultraschallwandler aufweist und vom Flügelrad zurückgeworfene Echos des Ultraschalls auswertet.

Den vorgenannten Fühlern ist gemeinsam, daß sie einen verhältnismäßig hohen Stromverbrauch aufweisen, da die Empfängerspulen bzw. der die Echos aufnehmende Schwingquarz mit einem Verstärker verbunden sein müssen, um aus den sehr kleine Amplitude aufweisenden Signalen Signale mit so hohen Pegeln zu erzeugen, wie dies für die Signalverarbeitung in handelsüblichen digitalen Schaltkreisen notwendig ist.

Daher liegt der Erfindung die Aufgabe zugrunde, einen Fühler gemäß dem Oberbegriff von Anspruch 1 zu schaffen, der weniger störanfällig ist, weil dennoch der Gesamt-Energieverbrauch sehr gering gehalten werden kann.

Diese Aufgabe wird erfindungsgemäß durch einen Fühler gemäß Anspruch 1 gelöst.

Der erfindungsgemäße Fühler hat zwei LC-Schwingkreise, welche auf dieselbe Frequenz abgestimmt sind, wobei die Sendespule und die Empfängerspule in einer Stellung des Modulationskörpers möglichst weitgehend magnetisch entkoppelt sind. Diese magnetische Entkopplung kann entweder für den Fall eingestellt sein, daß der Modulationskörper der Spulenanordnung gegenübersteht, oder auch für den Fall, daß der Modulationskörper von der Spulenanordnung entfernt ist. In jedem Falle wird dann, wenn der Modulationskörper aus der vorgenannten Lage herausbewegt wird, die Geometrie des Magnetflusses so geändert, daß nunmehr eine magnetische Kopplung zwischen Sendespule und Empfängerspule gegeben ist. Diese magnetische Kopplung ist zwar absolut gesehen klein, die relative Änderung der Kopplung der Spulen ist aber groß, weil in der oben angesprochenen ersten Lage des Modulationskörpers keine oder nur eine sehr kleine Kopplung zwischen den Spulen bestand.

Die Erfindung macht davon Gebrauch, daß die Absolutgröße der magnetischen Kopplung zweier LC-Schwingkreise nur einen Einfluß auf die Zeitspanne hat, welche benötigt wird, Schwingungsenergie vom einen Schwingkreis auf den anderen Schwingkreis zu übertragen, während die Amplitude der im angeregten Schwingkreis aufgebauten Spannung von der Größe der magnetischen Kopplung unabhängigist. Beaufschlagt somit der Speisekreis den Sende-Schwingungskreis mit Impulsen, deren Amplitude der Amplitude digitaler Signal entspricht, so erhält man am Ausgang des Empfänger-Schwingkreises eine Schwingung vergleichbarer Amplitude, welche nach Gleichrichtung direkt in üblichen digitalen Schaltkreisen verwendet werden kann. Da derartige digitale Schaltkreise eingangsseitig von Hause aus ein gleichrichtendes Element enthalten, kann der Empfänger-Schwingkreis direkt an einen solchen digitalen Schaltkreis angeschlossen werden; ein gesonderter Verstärker ist nicht notwendig. Sowohl hierdurch, als durch die Tatsache, daß zum Anstoßen des Sende-Schwingkreises Impulse sehr kurzer Dauer ausreichen, läßt sich der Energieverbrauch eines erfindungsgemäßen Fühlers sehr klein halten: In der Praxis läßt sich ein mittlerer Stromverbrauch von 100 nA bis 1000 nA erreichen, wenn die Schaltung mit CMOS-Schaltkreisen realisiert wird. Dies bedeutet, daß man einen erfindungsgemäßen Fühler mit handelsüblichen Langzeitbatterien mehr als 6 Jahre betreiben kann, also länger als dem gesetzlichen Nacheichintervall für Durchflußmesser von Wärmeabrechnungsanlagen entspricht.

Bekannte Fühler, bei welchen die Bedämpfung eines induktiven Oszillators durch eine an der Oszillatorspule vorbeibewegte leitende Metallfläche gemessen wird, haben einen demgegenüber hohen Stromverbrauch von mindestens 100 μA.

Ein weiterer Vorteil des erfindungsgemäßen Fühlers ist der, daß er praktisch temperaturunabhängig arbeitet, da etwaige temperaturbedingte Einflüsse auf die Kopplung von Sendespule und Empfängerspule sehr viel kleiner sind als die Kopplungsänderung durch den Modulationskörper.

An dem erfindungsgemäßen Fühler ist ferner vorteilhaft, daß keine abzugleichenden analogen Schaltkreise enthalten sind; die Signalverarbeitung erfolgt unter direktem Anschluß eines digitalen Bausteines an den empfängerseitigen Schwingkreis.

Anders als bei Fühlern, bei welchen die Änderung der Induktivität einer Spule durch eine vorbeilaufende elektrisch leitende Fahne gemessen wird, ist der erfindungsgemäße Fühler gegen externe magnetische Streufelder unempfindlich.

Da der Modulationskörper nur die magnetische Kopplung moduliert, nicht jedoch aus Permanentmagnet-Material besteht, und da im Fühler keine starken Magnetfelder verwendet werden, kann dieser auch bei Heizwasser-Durchflußmessern verwendet werden, ohne daß im Durchflußmesser im Heizwasser enthaltene magnetische Verunreinigungen abgeschieden werden.

Da durch den Kopplungs-Modulationskörper zusätzlich eine Verstimmung der Schwingkreise erfolgt, erhält man so eine zusätzliche Diskriminatorwirkung, welche zur Modulation der magnetischen Kopplung zwischen Sendespule und Empfängerspule hinzukommt.

Vorteilhafte Weiterbildungen der Erfindung sind in Unteransprüchen angegeben.

Die Weiterbildungen der Erfindung gemäß den Ansprüchen 4 und 5 sind im Hinblick auf ein möglichst großes Maximum der magnetischen Kopplung zwischen Sendespule und Empfängerspule von Vorteil.

Mit der Weiterbildung der Erfindung gemäß Anspruch 8 wird erreicht, daß der Modulationskörper in Bewegungsrichtung gesehen eine homogene Masseverteilung aufweist.

Die Weiterbildung der Erfindung gemäß Anspruch 9 ermöglicht es, die elektrisch leitende Schicht sehr dünn auszubilden, trotzdem aber auch über lange Zeiten hinweg ihre elektrischen Eigenschaften konstant zu halten, da keine Korrosion stattfinden kann.

Die Weiterbildung der Erfindung gemäß Anspruch 10 ist im Hinblick auf eine möglichst große Änderung der magnetischen Kopplung zwischen Sendespule und Empfängerspule beim Vorbeibewegen des Modulationskörpers von Vorteil.

Mit der Weiterbildung der Erfindung gemäß Anspruch 15 ist es möglich, auch die Bewegungsrichtung des Modulationskörpers zu bestimmen und unter Verwendung speziell ausgebildeter digitaler Filterkreise den Einfluß von Oszillationen des Modulationskörpers auf das Meßergebnis auszuräumen.

Mit der Weiterbildung der Erfindung gemäß den Ansprüchen 17 und 18 ist es möglich, die Sendespule und die Empfängerspule normalerweise zu entkoppeln, z. B. durch verhältnismäßig große räumliche Trennung. Durch den flächig ausgedehnten Modulationskörper kann in diesem Falle eine "Brücke" zwischen Empfängerspule und Sendespule hergestellt werden. Hierbei ist bei einem Fühler gemäß Anspruch 18 vorteilhaft, daß keine Aufmagnetisierung magnetischen Materiales notwendig ist, somit der Energiebedarf klein ist.

Nachstehend wird die Erfindung anhand eines Ausführungsbeispieles unter Bezugnahme auf die Zeichnung näher erläutert. In dieser zeigen:

Figur 1: einen axialen Schnitt durch einen Flügelrad-Durch-flußmesser;

Figur 2: eine Aufsicht auf den Durchflußmesser nach Figur 1, wobei einige Teile weggebrochen sind;

Figur 3: ein Blockschaltbild des auf die Bewegung des Flügelrades ansprechenden Fühlers des Durchflußmessers nach Figur 1;

Figur 4: eine grafische Darstellung, in welcher die Induktivität der Empfängerspule und die magnetische Kopplung zwischen Sendespule und Empfängerspule des Durchflußmessers nach den Figuren 1 bis 3 in Abhängigkeit vom Drehwinkel des Flügelrades gezeigt ist; und

Figur 5: eine schematische Aufsicht auf einen abgewandelten Durchflußmesser, in welcher nur die Sendespule, die Empfängerspule und eine Koppelspule schematisch wiedergegeben sind.

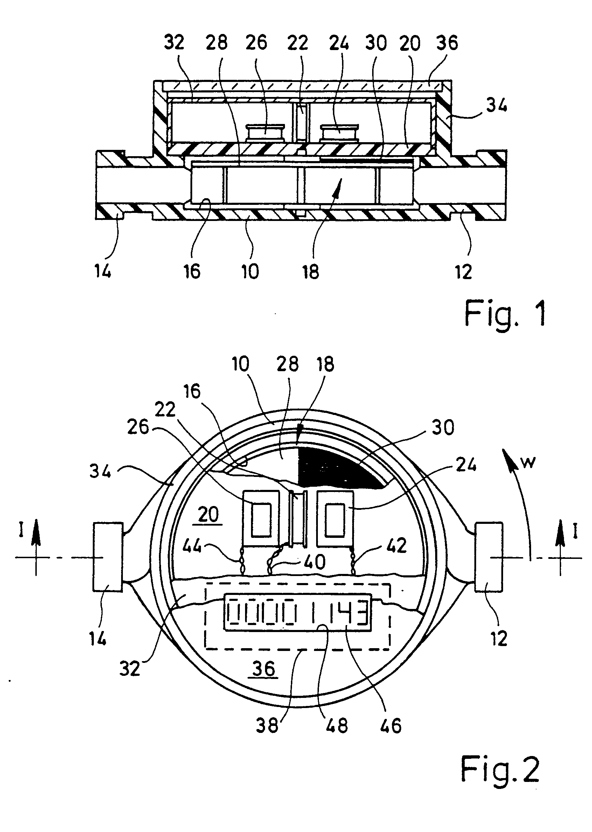

Der in den Figuren 1 und 2 wiedergegebene Durchflußmesser hat ein Gehäuse 10 mit einem Einlaßstutzen 12 und einem Auslaßstutzen 14. Diese münden beide außermittig in eine Meßkammer 16 ein, in welcher ein Flügelrad 18 läuft. Letzteres ist im Boden des Gehäuses 10 und einem Meßkammerdeckel 20 gelagert. Letzterer ist strömungsmitteldicht in das Gehäuse 10 eingesetzt, z.B. eingeklebt oder eingeschweißt.

Der Meßkammerdeckel 20 trägt auf seiner Oberseite eine Sendespule 22, welche der Drehachse des Flügelrades 18 benachbart auf der in Figur 2 obenliegenden Hälfte des Meßkammerdeckels 20 so ausgerichtet angebracht ist, daß ihre Symmetrieebene die Flügelrad-Drehachse schneidet.

Zu beiden Seiten der Sendespule 22 sind eine erste Empfängerspule 24 bzw. eine zweite Empfängerspule 26 angeordnet, wobei deren Mittelebene parallel zum Meßkammerdeckel 20 verläuft und deren Spulenachsen mit der Spulenachse der Sendespule 22 eine gemeinsame Ebene aufspannen.

Die Sendespule 22 und die Empfängerspulen 24 und 26 haben gleichen geometrischen und elektrischen Aufbau. Auf einen Wickelkern sind Wicklungen aus Kupferdraht rechteckig aufgewickelt. Die Spulen haben eine verglichen mit den Querschnittsabmessungen kleine axiale Abmessung.

Wie aus der Zeichnung ersichtlich, sind die Spulen dicht nebeneinander angeordnet, wobei zusätzlich darauf geachtet ist, daß die Radiusstrahlen von der Flügelrad-Drehachse zu den Mittelpunkten der Empfängerspulen 24, 26 einen Winkel von 90° einschließen.

Da die Achsen der Empfängerspulen 24, 26 senkrecht auf der Achse der Sendespule 22 stehen, ist die magnetische Kopplung zwischen der Sendespule und den Empfängerspulen im Nahfeld groß.

Das Flügelrad 18 hat ein scheibenförmiges Stirnteil 28, welches auf der Oberseite zur Hälfte mit einer dünnen Kupferschicht bedeckt ist, deren Dicke in der Zeichnung übertrieben wiedergegeben ist. In der Praxis kann die Kupferschicht 30 durch Ätzen eines ursprünglich die ganze Oberseite des Stirnteiles 28 bedeckenden Kupferfilmes hergestellt werden, wie bei der Herstellung von Leiterplatten an sich üblich.

Die Kupferschicht 30 ist durch einen dünnen, in der Zeichnung nicht näher wiedergegebenen Schutzfilm vollständig abgedeckt.

Eine becherförmige Abschirmung 32 ist in Figur 1 von oben über die durch die Sendespule 22 und die Empfängerspulen 24, 26 gebildete Spulenanordnung gestülpt und sitzt mit ihrem freien unteren Rand in einer Nut, welche durch eine Schulter des Meßkammerdeckels 20 und eine zylindrische Umfangswand 34 des Gehäuses 10 begrenzt ist. Ein durchsichtiger Deckel 36 schließt die Umfangswand 34 ab.

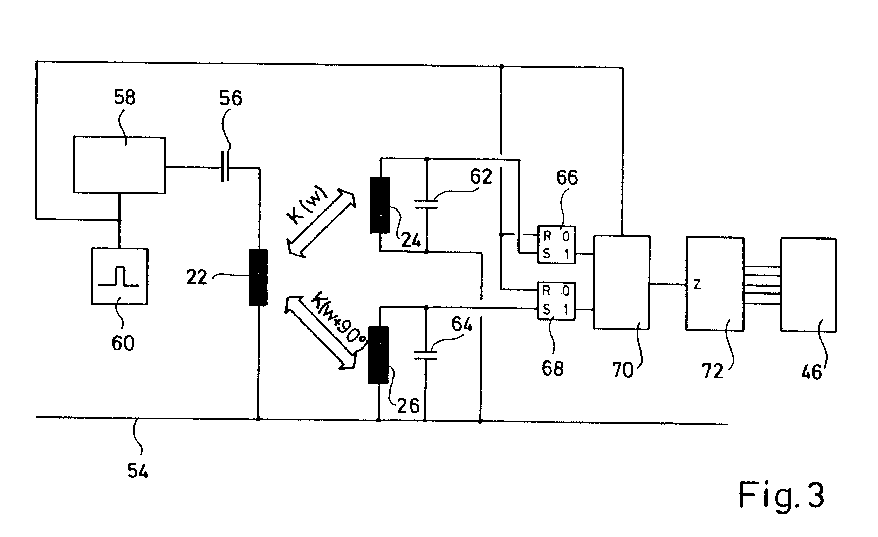

Der Meßkammerdeckel 20 trägt ferner eine Elektronikeinheit 38, mit welcher die Sendespule 22 über ein Kabel 40, die Empfängerspulen 24, 26 über weitere Kabel 42 und 44 verbunden sind. Die Elektronikeinheit 38 enthält neben einer Langzeitbatterie und später unter Bezugnahme auf Figur 3 noch näher zu erläuternden Schaltkreisen eine LCD-Segmentanzeige 46, welche durch ein Fenster 48 in der Abschirmung 32 und durch den Deckel 36 abgelesen werden kann.

Strömt bei eingebautem Durchflußmesser Wasser vom Einlaßstutzen 12 zum Auslaßstutzen 14, so wird durch dieses Wasser das Flügelrad 18 mitgenommen. Üblicherweise erhält man für einen Durchsatz von 1 Liter 30 Umdrehungen des Flügelrades 18.

Bei den Drehungen des Flügelrades 18 wird die halbkreisförmige Kupferschicht 30 entsprechend mitgenommen. Bezeichnet man den Drehwinkel der Kupferschicht 30 mit w, wobei dieser Winkel dann 0 sein soll, wenn der die Kupferschicht begrenzende Durchmesser mit der Achse der Stutzen 12, 14 zusammenfällt und die Kupferschicht 30 in Figur 2 unterhalb dieser zusammenfallenden Achsen liegt, so erreicht die Kupferschicht 30 nach einer Drehung von 90° die in Figur 2 wiedergegebene Stellung, in welcher sie die Unterseite der ersten Empfängerspule 24 überdeckt. Nach Drehung um weitere 90° überdeckt die Kupferschicht 30 sowohl die Unterseite der Empfängerspule 24 als auch die Unterseite der Empfängerspule 26. Nach einer Gesamtdrehung von 270° liegt die Kupferschicht 30 nur noch unter der zweiten Empfängerspule 26 und nach, weiterer Drehung um 90° liegt unter keiner der Empfängerspulen 24, 26 mehr elektrisch leitendes Material.

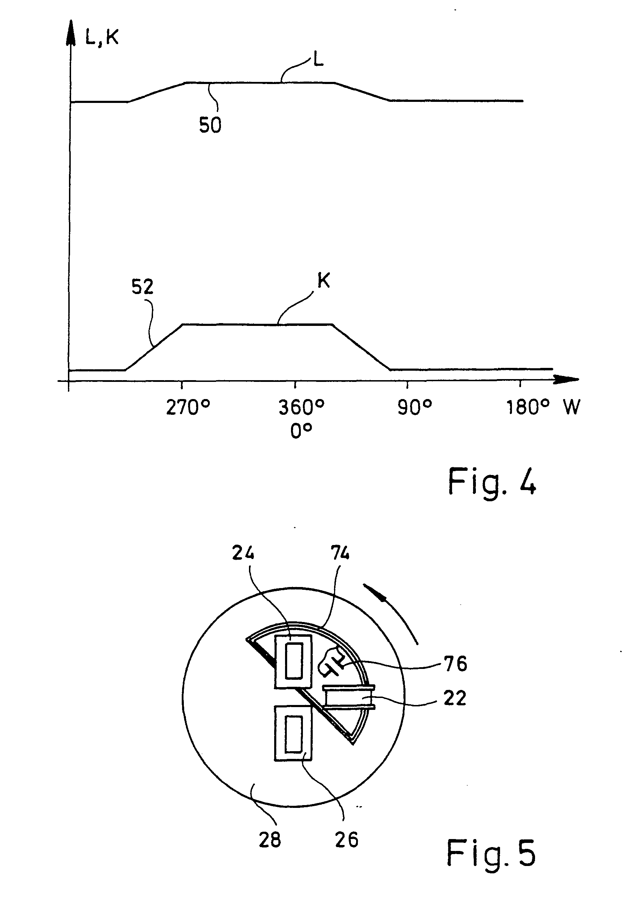

Die Gegenwart elektrisch leitenden Materiales in unmittelbarer Nähe einer Spule hat bei Beaufschlagung derselben mit einem Wechselspannungssignal die Folge, daß zur Induktivität der betrachteten Spule zusätzlich eine Kurzschlußwindung parallel geschaltet ist. Durch die Drehung des Flügelrades 18 erhält man somit eine Modulation der Induktivität der beiden Empfängerspulen 24, 26, welche für die Empfängerspule 24 in Figur 4 schematisch durch die Kurve 50 veranschaulicht ist. Man erkennt, daß die prozentuale Änderung der Induktivität L bzw. der Modulationsgrad verhältnismäßig klein ist.

In Figur 4 ist ferner die Änderung der magnetischen Kopplung K zwischen der Sendespule 22 und der Empfängerspule 24 in Abhängigkeit vom Drehwinkel des Flügelrades 18 aufgetragen. Man erkennt, daß die magnetische Kopplung K aufgrund der gewählten Ausrichtung der Spulenachsen ein großes Maximum hat. Beim Vorbeilaufen der Kupferschicht 30 an der Spulenanordnung wird das von der Sendespule 30 bei Beaufschlagung mit einem Wechselsignal erzeugte Wechselfeld kurzgeschlossen, und damit erreicht kein Magnetfluß die Empfängerspule 24 mehr. Anders gesagt: Die magnetische Kopplung zwischen Sendespule 22 und Empfängerspule 24 verschwindet. Man hat somit eine große prozentuale Änderung der magnetischen Kopplung zwischen Sendespule 22 und Empfängerspule 24.

Die grafischen Darstellungen von Figur 4 gelten sinngemäß für die Empfängerspule 26, wobei die Winkelwerte w jeweils um 90° zu erhöhen sind.

Wie aus Figur 3 ersichtlich, sind die Sendespule 22 und die Empfängerspulen 24 und 26 mit ihrer einen Anschlußklemme jeweils an eine Masseleitung 54 angeschlossen. Die zweite Klemme der Sendespule 22 ist über einen Kondensator 56 an die Ausgangsklemme eines schaltbaren Versorgungskreises 58 angeschlossen, dessen Steuerklemme mit der Ausgangsklemme eines Taktgebers 60 in Verbindung steht.

Der Taktgeber 60 erzeugt einzelne Impulse, deren Länge gleich einem Viertel der Periode desjenigen Schwingungskreises ist, welcher durch die Sendespule 22 und den Kondensator 56 gebildet ist.

Die Impulsfolgefrequenz des Taktgebers 60 ist so eingestellt, daß sie größer oder gleich dem Vierfachen der maximalen Drehzahl des Flügelrades 18 ist. In der Praxis beträgt die Arbeitsfrequenz des Taktgebers 60 300 Hz, so daß der Durchflußmesser einen Durchsatz von 2 1/sek haben kann.

Durch jeden vom Taktgeber 60 abgegebenen Impuls werden im durch die Sendespule 22 und den Kondensator 56 gebildeten LC-Kreis Schwingungen angestoßen, welche zu einem entsprechenden magnetischen Wechselfeld führen. Die Induktivität der Sendespule 22 und die Kapazität des Kondensators 56 sind typischerweise so gewählt, daß man eine Eigenfrequenz des Schwingkreises von 1 bis 2 MHz erhält. Die Breite der vom Taktgeber 60 abgegebenen Impulse kann dann größenordnungsmäßig 200 ns betragen, wobei die Stromstärke auf 20 bis 50 mA eingestellt wird.

Ist die Kopplung zwischen der Sendespule 22 und den Empfängerspulen 24 und 26 "klein" so klingt das durch einen Impuls des Taktgebers 60 herbeigeführte magnetische Wechselfeld ab, ohne daß in den Empfängerspulen eine nennenswerte Spannung aufgebaut wird. Ist dagegen die magnetische Kopplung zwischen Sendespule und Empfängerspule "groß" (Winkelbereich zwischen 270° und 30° von Figur 4), so wird die Schwingungsenergie vom sendeseitigen Schwingkreis 22, 56 auf einen auf gleiche Frequenz eingestellten empfängerseitigen Schwingkreis übertragen, welcher jeweils durch eine Empfängerspule und einen hierzu parallel geschalteten Kondensator gebildet ist. Die entsprechenden Kondensatoren für die erste bzw. zweite Empfängerspule sind in der Zeichnung mit 62 bzw. 64 bezeichnet.

Diese Übertragung der Schwingungsenergie findet auch bei kleinem Absolutwert der magnetischen Kopplung zwischen Sendespule und Empfängerspule statt. Typischerweise wird eine vollständige Übertragung der Schwingungsenergie innerhalb einer Zeitspanne von ca. 100 Periodendauern (etwa 100 Mikrosekunden) erhalten, wenn man von einer typischen Güte von 100 für den empfängerseiten Schwingkreis und den sendeseitigen Schwingkreis ausgeht.

Dank der oben beschriebenen speziellen Geberausbildung erhält man bei Vorliegen einer "großen" Kopplung zwischen Sendespule und Empfängerspule im empfängerseitigen Schwingkreis unmittelbar Signale, deren Pegel den Pegeln logischer Signale zum Ansteuern digitaler Schaltelemente vergleichbar ist. Eine zusätzliche Verstärkung dieser Signale ist somit nicht notwendig.

Der Ausgang des durch die erste Empfängerspule 24 und des Kondensators 62 gebildeten ersten empfängerseitigen Schwingkreises ist mit dem Setz-Eingang eines Flip-Flops 66 verbunden. Da handelsübliche Flip-Flops 66 eingangsseitig ein gleichrichtenden Kreis enthalten, wird die Wechselspannung am Ausgang des Schwingungskreises automatisch in ein Gleichspannungssignal entsprechender Amplitude umgesetzt, so daß man am Ausgang des Flip-Flops 66 dann ein Signal erhält, wenn sich das Flügelrad 18 um zwischen 270° und 360° gedreht hat. Ähnlich erhält man am Ausgang eines Flip-Flops 68, welches an den Ausgang des durch die zweite Empfängerspule 26 und des Kondensators 64 gebildeten zweiten empfängerseitigen Schwingkreises angeschlossen ist, dann ein Signal, wenn sich das Flügelrad 18 um 0° bis 90° gedrehthat. Die Rückstellung der Flip-Flops erfolgt durch den Taktgeber 60.

Betrachtet man die Ausgangssignale der beiden Flip-Flops 66, 68 als zweistellige binäre Zahl, so erhält man die nachstehende Stellungskodierung für das Flügelrad 18:

| Drehwinkel | Stellungs-Code |
|---|---|
| 90° | "01" |
| 180° | "00" |
| 270° | "10" |
| 360° | "11" |

Die Ausgänge der beiden Flip-Flops 66, 68 sind mit den beiden Eingängen eines digitalen Rechenkreises 70 verbunden, welcher dazu dient, Signalkomponenten zu eliminieren, die auf Oszillationen des Flügelrades 18 zurückzuführen sind, die an den Ausgängen der Flip-Flops 66, 68 erhaltenen Impulsfolgen zur Anpassung des Meßbereiches des Durchflußmessers herunterzuteilen oder andere Signalverarbeitungen durchzuführen, für welche bei herkömmlichen Durchflußzählern mechanische Abgleicharbeiten durchgeführt werden müssen.

Der Rechenkreis 70 arbeitet getaktet durch das Ausgangssignal des Taktgebers 60 und gibt — grob gesprochen — für jede Änderung des oben angesprochenen Stellungs-Codes oder für eine vorgegebene Anzahl solcher Änderungen am Ausgang einen Zählimpuls ab, soweit nicht festgestellt wird, daß diese Änderungen Oszillationen entsprechen. Zur letzgenannten Überprüfung enthält der Rechenkreis 70 Speicher für eine vorgegebene Anzahl zuvor erhaltener Stellungs-Codes.

Der Ausgang des Rechenkreises 70 ist mit der Zählklemme Z eines digitalen Zählers 72 verbunden, dessen Stand somit der insgesamt durch den Durchflußmesser hindurchgeflossenen Wassermenge entspricht. Durch den Zähler 72 wird die Segmentanzeige 46 angesteuert.

In Figur 3 sind die winkelabhängigen Kopplungsfaktoren zwischen der Sendespule 22 und den Empfängerspulen 24 und 26 durch Pfeile angedeutet.

Bei einem praktischen Ausführungsbeispiel ist das Gehäuse 10 aus faserverstärktem Kunststoff gespritzt. Das Gehäuse 10 kann stattdessen auch in üblicher Weise aus Messing hergestellt sein. Nur der Meßkammerdeckel 20 muß in jedem Falle aus elektrisch nicht leitendem Material bestehen.

Die Sendespule 22 und die Empfängerspulen 24 und 26 haben bei einem Durchmesser der Meßkammer 16 von etwa 90mm in Aufsicht gesehen einen Querschnitt von 10 × 15 mm und eine axiale Bauhöhe von 3 mm. Jede der Spulen enthält 85 Windungen eines Kupferdrahtes von 0,1 mm Durchmesser.

Wichtig ist, daß die Spulen gleiche Geometrie und Windungszahl haben und auch die zugeordneten Kondensatoren (im Rahmen der Güte) gleich sind. Temperaturbedingte Änderungen von Induktivität und Kapazität sind bei dem oben beschriebenen Durchflußmesser ohne Bedeutung, da es nicht auf die Absolutwerte der Eigenfrequenzen der Schwingkreise sondern nur auf deren Gleichheit ankommt.

Figur 5 zeigt schematisch die wichtigsten elektromechanischen Teile eines abgewandelten Durchflußmessers. Die Sendespule 22 und zwei symetrisch zu ihr angeordnete Empfängerspulen 24 und 26 sind wieder von einem nicht näher gezeigtem feststehenden Gehäuseteil getragen, während auf dem Stirnteil 28 eine im esentlichen halbkreisförmige, flächig ausgedehnte Koppelspule 74 angebracht ist. Die Enden des die Koppelspule 74 bildenden elektrischen Leiters sind mit den Klemmen eines Speicher Kondensators 76 verbunden, so daß die Koppelspule 74 und der Speicherkondensator 76 zusammen einen Schwingkreis bilden.

Wie aus Figur 5 ersichtlich, sind die Empfängerspulen 24, 26 auf Radiusstrahlen angeordnet, welche mit dem zur Sendespule 22 führenden Radiusstrahl einen Winkel von 90° einschließen. Aufgrund dieser Spulengeometrie ist die magnetische Kopplung zwischen der Sendespule und den Empfängerspulen klein. Bei einer Stellung der Koppelspule 74, welche zusammen mit dem Flügelrad des Durchflußmessers umläuft, wie sie in Figur 5 wiedergegeben ist, besteht dagegen sowohl eine gute magnetische Kopplung zwischen Sendespule 22 und Koppelspule 74 einerseits als auch zwischen der Koppelspule 74 und der Empfängerspule 26 andererseits. Der Wert des Speicherkondensators 76 ist so gewählt, daß der durch Koppelspule 74 und Speicherkondensator 76 gebildete Schwingkreis die selbe Eigenfrequenz hat wie der durch die Sendespule 22 und den Kondensator 56 gebildete Schwingkreis und die durch die Empfängerspulen 24, 26 und die Kondensatoren 62, 64 gebildeten Schwingkreise. Damit wird die vom Versorgungskreis 58 in den Sende-Schwingkreis eingespeiste Energie zunächst auf den durch die Koppelspule 74 und den Speicherkondensator 76 Koppel-Schwingkreis übertragen und gelangt von dort auf die gleich abgestimmten Empfänger-Schwingkreise, wenn man eine geometrische überlappung zwischen Sendespule, Koppelspule und Empfängerspule hat, wie sie in Figur 5 wiedergegeben ist. Liegen derartige geometrische Bedingungen bei einer anderen Winkelstellung des Flügelrades des Durchflußmessers nicht vor, so wird am Ausgang der Empfänger-Schwingkreise kein Signal erhalten.

In Abwandlung des Ausführungsbeispieles nach Figur 5 kann man anstelle des Koppel-Schwingkreises auch eine geschlossene Koppelspule verwenden, also den Kondensator 76 durch eine Kurzschlußstrecke ersetzen.

## Patentansprüche

1. Fühler zum Umsetzen einer mechanischen Eingangsgröße in eine elektrische Ausgangsgröße, insbesondere zur Verwendung an einem Flügelrad-Durchflußmesser, mit einer stationären Sendespule (22) und einem mit ihr einen sendeseitigen Schwingkreis (22, 56) bildenden Kondensator (56), mit einem Speisekreis (58) für den Sendeseitigen Schwingkreis (22, 56) einer stationären Empfängerspule (24) und einem mit ihr einen empfangsseitigen Schwingkreis (24, 62) bildenden empfangsseitigen Kondensator (62), wobei die Induktivitäten und Kapazitäten insgesamt so gewählt sind, daß der sendeseitige Schwingkreis (22, 56) und der empfangsseitige Schwingkreis (24, 62) eine im wesentlichen gleiche Eigenfrequenz haben, mit einem den Magnetfluß von der Sendespule (22) zur Empfängerspule (24) modifizierenden Modulationskörper (30), welcher mit einem mechanischen Fühlereingangsglied gekoppelt ist, und mit einer mit dem Ausgangssignal der Empfängerspule (24) beaufschlagten Auswerteschaltung, dadurch gekennzeichnet, daß der Speisekreis (58) Stromimpulse mit vorgegebenen Peger abgibt, deren Länge einem Bruchteil der Periode des sendeseitigen Schwingkreises (22, 56) entspricht, und daß die Sendespule (22), die Empfängerspule (24) und der Modulationskörper (30) räumlich so ausgerichtet sind, daß entweder dann, wenn der Modulationskörper (30) sich in einer beiden Spulen (22, 24) zugleich gegenüberliegenden Drehstellung befindet, oder dann, wenn der Modulationskörper (30) von beiden Spulen (22, 24) entfernt ist, die magnetische Kopplung zwischen den beiden Spulen (22, 24) im wesentlichen Null ist und eine magnetische Kopplung in einer je anderen Stellung des Modulationskörpers (30) vorgesehen ist, wobei die Sendespule (22) und die Empfängerspule (24) in Drehrichtung des Modulationskörpers (30) hintereinander und außerhalb eine Ebene angeordnet sind, deren Normale mit der Drehachse des Modulationskörpers (30) zusammenfällt und die durch den Modulationskörper (30) verläuft.

2. Fühler nach Anspruch 1, dadurch gekennzeichnet daß der vorgegebene Pegel so gewählt ist, daß von dem empfangsseitigen Schwingkreis (24, 62) beim Vorliegen magnetischer Kopplung ein digitalen Signalen entsprechender Pegel abgebbar ist.

3. Fühler nach einem der Ansprüche 1 oder 2, dadurch gekennzeichnet, daß der empfangsseitige Schwingkreis (24, 62) so abgestimmt ist, daß seine Parallelresonanzfrequenz möglichst exakt der Serienresonanzfrequenz des senderseitigen Schwingkreises (22, 56) entspricht.

4. Fühler nach einem der Ansprüche 1 bis 3, dadurch gekennzeichnet, daß die Achsen von Sendespule (22) und Empfängerspule (24) einen im wesentlichen rechten Winkel einschließen.

5. Fühler nach Anspruch 4, dadurch gekennzeichnet, daß die Achse der Sendespule (22) vom Mittelpunkt der Empfängerspule (24) beabstandet ist.

6. Fühler nach einem der Ansprüche 1 bis 5, dadurch gekennzeichnet, daß die durch die Spulen (22, 24) und die zugeordneten Kondensatoren (56, 62) gebildeten Schwingkreise eine Güte von größenordnungsmäßig 100 aufweisen.

7. Fühler nach einem der Ansprüche 1 bis 6, dadurch gekennzeichnet, daß die Sendespule (22) und die Empfängerspule (24) Wicklungen mit verglichen mit dem Spulenquerschnitt kleiner axialer Abmessung und insbesondere rechteckig sind.

8. Fühler nach einem der Ansprüche 1 bis 7, dadurch gekennzeichnet, daß der Modulationskörper (30) eine Schicht aus elektrisch leitendem Material ist, welche auf einem elektrisch isolierenden Grundkörper (28) angeordnet ist.

9. Fühler nach Anspruch 8, dadurch gekennzeichnet, daß die elektrisch leitende Schicht (30) dünn ist und durch eine nichtleitende Schutzschicht abgedeckt ist.

10. Fühler nach einem der Ansprüche 1 bis 9, dadurch gekennzeichnet, daß die Sendespule (22) und die Empfängerspule (24) einander nahe benachbart sind und mit dem Modulationskörper (30) beide Spulen gleichzeitig überdeckbar sind.

11. Fühler nach einem der Ansprüche 1 bis 10, dadurch gekennzeichnet, daß das Ausgangssignal des empfangsseitigen Schwingkreises (24, 62) direkt auf den Eingang eines digitalen Schaltelementes (66) gegeben wird, dessen Ausgangssignal bei der Herstellung von Zählimpulsen für einen digitalen Zähler (72) verwendet wird.

12. Fühler nach einem der Ansprüche 1 bis 11, dadurch gekennzeichnet, daß der Speisekreis (58) Stromimpulse abgibt, deren Länge einem Viertel der Periode des sendeseitigen Schwingkreises (22, 56) entspricht.

13. Fühler nach einem der Ansprüche 1 bis 12, gekennzeichnet durch eine Abschirmung (32), welche die von der Bewegungsebene des Modulatonskörpers (30) abliegende Seite der Spulenanordnung (22 bis 26) umschließt.

14. Fühler nach einem der Ansprüche 1 bis 13, dadurch gekennzeichnet, daß der Modulationskörper (30) um eine raumfeste Achse umläuft und die Form eines zur Drehachse konzentrischen Kreissektors hat, und daß die Sendespule (22) in einer die Drehachse enthaltenden Ebene von der Drehachse entfernt angeordnet ist und die Empfängerspule (24) entsprechend auf einer Sekanten der durch die Bahn des Modulationskörpers (30) vorgegebenen Kreisfläche liegt.

15. Fühler nach einem der Ansprüche 1 bis 14, gekennzeichnet durch eine zur Empfängerspule (24) bezüglich der Mittelebene der Sendespule (22) symmetrisch angeordnete Hilfs-Empfängerspule (26) und einen mit dieser verbundenen Kondensator (64) und durch eine mit den Ausgangssignalen beider Empfänger-Schwingkreise (24, 62; 26, 64) beaufschlagte Rechenschaltung (70) zur Ermittlung der Bewegungsrichtung des Modulatonskörpers (30) und/oder zur Ausmittelung von Oszillationen des Modulationskörpers (30) und/oder zur Skalierung des Fühler-Ausgangssignales.

16. Fühler nach Anspruch 15, dadurch gekennzeichnet, daß die Hilfs-Empfängerspule (26) gleich ausgebildet ist wie die Empfängerspule (24) und der mit ihr verbundene Kondensator (64) dem über die Empfängerspule (24) geschalteten Kondensator entspricht.

17. Fühler nach einem der Ansprüche 1 bis 7 oder 10 bis 16, dadurch gekennzeichnet, daß die Sendespule (22) und die Empfängerspule (24) normalerweise magnetisch entkoppelt sind und der Modulationskörper durch eine flächig ausgedehnte Schicht aus magnetisierbarem Material gebildet ist, welche einen magnetischen Pfad zwischen Sendespule (22) und Empfängerspule (24) schließen kann.

18. Fühler nach einem der Ansprüche 1 bis 7 oder 10 bis 16, dadurch gekennzeichnet, daß die Sendespule (22) und die Empfängerspule (24) normalerweise magnetisch entkoppelt sind und der Modulationskörper eine flächenhafte Koppelspule (74) aufweist, deren Querschnittsfläche so bemessen ist, daß sie eine indirekte Kopplung zwischen Sendespule (22) und Empfängerspule (24) herbeiführen kann, und daß die Koppelspule (74) mit einem Speicher-Kondensator (76) verbunden ist.

19. Fühler nach einem der Ansprüche 4 bis 18, dadurch gekennzeichnet, daß die Achse der Empfängerspule (24) senkrecht auf der Bewegungsebene des Modulatonskörpers (30) steht.

**Revendications**

1. Capteur destiné à transformer une grandeur d'entrée mécanique en une grandeur de sortie électrique, destiné en particulier à être utilisé sur un débitmètre à roue à palettes, comprenant une bobine émettrice fixe (22) et un condensateur (56) qui forme avec cette bobine un circuit oscillant côté émetteur (22, 56), un circuit d'alimentation (58) pour le circuit oscillant côté émetteur (22, 56), une bobine réceptrice fixe (24) et un condensateur côté récepteur (62) qui forme avec elle un circuit oscillant côté récepteur (24, 62), les inductances et capacités de l'ensemble étant choisies en sorte que le circuit oscillant côté émetteur (22, 56) et le circuit oscillant côté récepteur (24, 62) aient des fréquences propres sensiblement égales, un élément de modulation (30) qui modifie le flux magnétique allant de la bobine émettrice (22) à la bobine réceptrice (24) et qui est accouplé à un organe d'entrée mécanique du capteur et un circuit d'analyse qui est excité par un signal de sortie de la bobine réceptrice (24), caractérisé en ce que le circuit d'alimentation (58) émet des impulsions de courant d'un niveau prédéterminé dont la longueur correspond à une fraction de la période du circuit oscillant côté émetteur (22, 56) et en ce que la bobine émettrice (22), la bobine réceptrice (24) et l'élément de modulation (30) sont disposés dans l'espace de telle manière que, soit lorsque l'élément de modulation (30) se trouve dans une position de rotation qui fait face simultanément aux deux bobines (22, 24), soit lorsque l'élément de modulation (30) est éloigné des deux bobines (22, 24), le couplage magnétique entre les deux bobines (22, 24) est sensiblement nul, et qu'il existe un couplage magnétique dans une autre position de l'élément de modulation (30), la bobine émettrice (22) et la bobine réceptrice (24) étant disposées l'une derrière l'autre dans le sens de la rotation de l'élément de modulation (30) et en dehors d'un plan dont la normale coïncide avec l'axe de rotation de l'élément de modulation (30) et qui passe par l'élément de modulation.

2. Capteur selon la revendication 1, caractérisé en ce que ledit niveau prédéterminé est choisi de manière que le circuit oscillant (24, 62) côté récepteur puisse émettre un niveau correspondant aux signaux numériques en présence d'un couplage magnétique.

3. Capteur selon l'une des revendications 1 et 2, caractérisé en ce que le circuit oscillant côté récepteur (24, 62) est accordé de manière que sa fréquence de résonance parallèle corresponde aussi exactement que possible à la fréquence de résonance série du circuit oscillant côté émetteur (22, 56).

4. Capteur selon une des revendications 1 à 3, caractérisé en ce que les axes de la bobine émettrice (22) et de la bobine réceptrice (24) forment un angle sensiblement droit.

5. Capteur selon la revendication 4, caractérisé en ce que l'axe de la bobine émettrice (22) est espacé du centre de la bobine réceptrice (24).

6. Capteur selon l'une des revendications 1 à 5, caractérisé en ce que les circuits oscillants formés par les bobines (22, 24) et les condensateurs (56, 62) qui leurs sont associés possèdent une qualité de l'ordre de grandeur de 100.

7. Capteur selon l'une des revendications 1 à 6, caractérisé en ce que la bobine émettrice (22) et la bobine réceptrice (24) ont des enroulements qui possèdent une dimension axiale petite comparativement à la section de la bobine et sont en particulier rectangulaires.

8. Capteur selon l'une des revendications 1 à 7, caractérisé en ce que l'élément de modulation (30) est une couche d'une matière électroconductrice qui est disposée sur un élément de base (28) isolant de l'électricité.

9. Capteur selon la revendication 8, caractérisé en ce que la couche électroconductrice (30) est mince et recouverte d'une couche protectrice non conductrice.

10. Capteur selon l'une des revendications 1 à 9, caractérisé en ce que la bobine émettrice (22) et la bobine réceptrice (24) sont proches l'une de l'autre et que les deux bobines peuvent être recouvertes simultanément par l'élément de modulation (30).

11. Capteur selon l'une des revendications 1 à 10, caractérisé en ce que le signal de sortie du circuit oscillant côté réception (24, 62) est envoyé directement à l'entrée d'un élément de commutation numérique (66) dont le signal de sortie est utilisé pour la formation d'impulsions de comptage destinées à un compteur numérique (72).

12. Capteur selon l'une des revendications 1 à 11, caractérisé en ce que le circuit d'alimentation (58) émet des impulsions de courant dont la longueur correspond au quart de la période du circuit oscillant côté émetteur (22, 56).

13. Capteur selon l'une des revendications 1 à 12, caractérisé par un blindage (32) qui enferme le côté de l'ensemble de bobines (22 à 26) qui est le plus éloigné du plan de déplacement de l'élément de modulation (30).

14. Capteur selon l'une des revendications 1 à 13, caractérisé en ce que l'élément de modulation (30) tourne autour d'un axe fixe dans l'espace et possède la forme d'un secteur de cercle concentrique à l'axe de rotation, et en ce que la bobine émettrice (22) est disposée dans un plan contenant l'axe de rotation, mais à distance de l'axe de rotation et la bobine réceptrice (24) se trouve en conséquence sur une sécante de la surface circulaire définie par le trajet de l'élément de modulation (30).

15. Capteur selon l'une des revendications 1 à 14, caractérisé par une bobine réceptrice auxiliaire (26), dans une position symétrique de celle de la bobine réceptrice (24) par rapport au plan médian de la bobine émettrice (22), et un condensateur (64) connecté à cette bobine, et par un circuit calculateur (70) qui est excité par les signaux de sortie des deux circuits oscillants récepteurs (24, 62; 26, 64) pour déterminer le sens du mouvement de l'élément de modulation (30) et/ou pour éliminer les oscillations de l'élément de modulation (30) et/ou transformer le signal de sortie du capteur en unités scalaires.

16. Capteur selon la revendication 15, caractérisé en ce que la bobine réceptrice auxiliaire (26) est de même configuration que la bobine réceptrice (24) et en ce que le condensateur (64) qui lui est connecté correspond au condensateur connecté à la bobine réceptrice (24).

17. Capteur selon l'une des revendications 1 à 7 ou 10 à 16, caractérisé en ce que la bobine émettrice (22) et la bobine réceptrice (24) sont normalement découplées magnétiquement et en ce que l'élément de modulation est formé d'une couche d'une matière magnétisable qui est d'une surface étendue et qui peut fermer un circuit magnétique entre la bobine émettrice (22) et la bobine réceptrice (24).

18. Capteur selon une des revendications 1 à 7 ou 10 à 16, caractérisé en ce que la bobine émettrice (22) et la bobine réceptrice (24) sont normalement découplées magnétiquement et l'élément de modulation présente une bobine de couplage plate (74) dont la surface de section est calculée de manière à pouvoir engendrer un couplage indirect entre la bobine émettrice (22) et la bobine réceptrice (24) et en ce que la bobine de couplage (74) est connectée à un condensateur accumulateur (76).

19. Capteur selon l'une des revendications 4 à 18, caractérisé en ce que l'axe de la bobine réceptrice (24) est perpendiculaire au plan de déplacement de l'élément de modulation (30).

## Claims

1. Transducer for transferring a mechanical input value to an electrical output value, preferably but optionally for use with a vane wheel flowmeter, comprising a stationary transmitter coil (22) and a capacitor forming a resonance circuit (22, 56) on the transmitter side; a feed circuit (58) for the resonance circuit (22, 56) on the transmitter side; a stationary receiver coil (24) and a capacitor (62) forming a resonance circuit (24, 62) on the receiver side, where the inductivities and capacities are selected such that the resonance circuit (22, 56) on the transmitter side and the resonance circuit (24, 62) on the receiver side have a resonance frequency which is essentially equal; a modulating body (30) modifying the magnetic flux from the transmitter coil (22) to the receiver coil (24) which modulating body is coupled to a mechanical transducer input member; and an evaluating circuit being fed with the output signal of said receiver coil (24), characterized in that the feed circuit (58) provides current pulses having a predetermined level, the length of which current pulses corresponds to a fractional part of the period of said resonance circuit (22, 56) on the transmitter side, and that said transmitter coil (22), said receiver coil (24) and said modulating body (30) are oriented in space such that either if the modulating body is in a rotational position facing both coils (22, 24) simultaneously, or if the modulating body is remote from both coils (22, 24), the magnetic coupling effect between both coils (22, 24) is essentially zero, and the magnetic coupling effect is provided in the other position of the modulating body (30), respectively, and whereat the transmitter coil (23) and the receiver coil (24) are arranged subsequent in the rotational direction of the modulating body (30) and outside of a plane the perpendicular of which coincedes with the rotational axis of said modulating body, and which extends through the modulating body (30).

2. Transducer according to claim 1, characterized in that the predetermined level is selected such that the resonance circuit (24, 62) on the receiver side can supply an output level corresponding to digital signals when magnetic coupling is present.

3. Transducer according to one of the claims 1 or 2, characterized in that the resonance circuit (24, 62) on the receiver side is tuned such that its parallel resonance frequency is in accordance with the series resonance frequency of the resonant circuit on the transmitter side as exact as possible.

4. Transducer according to one of the claims 1 to 3, characterized in that the axis of the transmitter coil (22) and the receiver coil (24) extend essentially orthogonally to each other.

5. Transducer according to claim 4, characterized in that the axis of the transmitter coil (22) is distant from the center of the receiver coil (24).

6. Transducer according to one of the claims 1 to 5, characterized in that the resonance circuits formed by the coils (22, 24) and the corresponding capacitors (56, 62) have a Q-factor of about 100.

7. Transducer according to claims 1 to 6, characterized in that the transmitter coil (22) and the receiver coil (24) have windings with small axial dimensions in relation to the coil diameter, and preferably but optionally are rectangular.

8. Transducer according to one of the claims 1 to 7, characterized in that the modulation body (30) is a layer of electrically conducting material which is arranged on an electrically insulating base (28).

9. Transducer according to claim 8, characterized in that the electrically conducting layer (30) is thin and is covered by a non-conducting protection layer.

10. Transducer according to one of the claims 1 to 9, characterized in that the transmitter coil (22) and the receiver coil (24) are closely adjacent to each other and that both of the coils can be overlapped simultaneously by the modulation body (30).

11. Transducer according to one of the claims 1 to 10, characterized in that the output signal of the resonance circuit (24, 62) on the receiver side is supplied directly to the input of a digital circuit element (66) the output signal of which is used when providing counter pulses for a digital counter (72).

12. Transducer according to one of the claims 1 to 11, characterized in that the feed circuit (58) supplies current pulses the length of which corresponds to a quarter of the period of the resonant circuit (22, 56) on the transmitter side.

13. Transducer according to one of the claims 1 to 12, characterized by a shielding (32) surrounding the side of the coil arrangement (22 to 26) being far from the plane of motion of the modulating body (30).

14. Transducer according to one of the claims 1 to 13, characterized in that the modulating body (30) rotates around a fixed axis and has the form of a circle sector which is concentric to the axis of rotation, and that the transmitter coil (22) is arranged, in a plane comprising the axis of rotation, remote from the axis of rotation and the receiver coil (24) lies correspondingly on a secant of the circle area given by the path of the modulating body (30).

15. Transducer according to one of the claims 1 to 14, characterized by an auxiliary receiver coil (26) arranged symmetrically to the receiver coil (24) with respect to the centre plane of the transmitter coil (22), and by a capacitor (64) connected therewith, and by a computing circuit (70) being supplied with the output signals of both receiver resonance circuit (24, 62; 26, 64) for obtaining the direction of motion of the modulating body (30) and/or for compensating and balancing any oscillations of the modulation body (30) and/or for scaling the transducer output signal.

16. Transducer according to claim 15, characterized in that the auxiliary receiver coil (26) is formed equal to the receiver coil (24) and the capacitor (64) connected to the auxiliary receiver coil (26) corresponds to the capacitor connected across the receiver coil (24).

17. Transducer according to one of the claims 1 to 7 or 10 to 16, characterized in that the transmitter coil (22) and the receiver coil (24) are usually not coupled magnetically and that the modulation body is formed by a flat extending layer of material which can be magnetized and which layer can close a magnetic path between the transmitter coil (22) and the receiver coil (24).

18. Transducer according to one of the claims 1 to 7 or 10 to 16 characterized in that the transmitter coil (22) and the receiver coil (24) usually are not coupled magnetically and that the modulation body comprises a flat coupling coil (74) the cross-sectional area of which is calculated such that the coupling coil can provide an indirect coupling between the transmitter coil and the receiver coil (24), and that the coupling coil (74) is connected to a store capacitor (76).

19. Transducer according to one of the claims 4 to 18, characterized in that the axis of the receiver coil (24) is arranged perpendicular to the plane of motion of the modulating body (30).

Fig. 1

Fig.2

Fig.3

Fig. 4

Fig. 5